# EUROPEAN PATENT SPECIFICATION

(11) **EP 4 105 146 B1**
(45) Date of publication and mention of the grant of the patent: **06.11.2024**
(21) Application number: 22764635.3
(22) Date of filing: 02.02.2022
(51) Int. Cl.: B65F 5/00, G01C 21/26, G01C 21/34, G06Q 30/02, G06Q 50/10

(54) **GARBAGE DISPOSAL ASSISTANCE DEVICE AND GARBAGE DISPOSAL ASSISTANCE METHOD**
ABFALLENTSORGUNGSHILFSVORRICHTUNG UND ABFALLENTSORGUNGSHILFSVERFAHREN
DISPOSITIF D'AIDE À L'ÉLIMINATION DES DÉCHETS ET PROCÉDÉ D'AIDE À L'ÉLIMINATION DES DÉCHETS

(30) Priority: 16.03.2021 JP 2021042272; 16.03.2021 JP 2021042271
(43) Date of publication of application: 21.12.2022
(73) Proprietor: JVCKENWOOD Corporation, Yokohama-shi, Kanagawa 2210022 (JP)
(72) Inventor: MIHARA Masaya, Yokohama-shi Kanagawa 2210022 (JP); TAKESHITA Hiroshi, Yokohama-shi Kanagawa 2210022 (JP); KONDO Ayako, Yokohama-shi Kanagawa 2210022 (JP); SUGIYAMA Tomoki, Yokohama-shi Kanagawa 2210022 (JP); FURUKAWA Tadashi, Yokohama-shi Kanagawa 2210022 (JP); MURATA Toshitaka, Yokohama-shi Kanagawa 2210022 (JP); KOBAYASHI Toshihide, Yokohama-shi Kanagawa 2210022 (JP); YOSHIKAWA Hiroshi, Yokohama-shi Kanagawa 2210022 (JP); SUNAGA Ryohei, Yokohama-shi Kanagawa 2210022 (JP)
(74) Representative: Potter Clarkson
(86) International application number: PCT/JP2022/004073
(87) International publication number: WO 2022/196152

(56) References cited:
- WO-A1-2018/216299
- CN-A- 110 386 376
- CN-A- 110 406 839
- CN-A- 110 427 869
- CN-A- 111 217 047
- CN-A- 111 553 354
- CN-U- 212 333 579
- JP-A- 2017 030 920
- JP-A- 2018 007 677
- JP-A- 2018 007 677
- JP-A- 2020 087 134

## Description

### Technical Field

The present disclosure relates to a garbage disposal support apparatus and a garbage disposal support method.

### Background Art

To reduce illegal disposal of garbage, reduction in load on a person disposing of garbage is important. For example, a garbage can in Patent Literature 1 has a configuration of automatically opening a movable lid when the presence of a person is detected by a weight sensor arranged in front of the garbage can. The garbage can in Patent Literature 1 has a configuration where if garbage other than plastic garbage as a disposal target is disposed of, a person having disposed of the garbage is warned.

For example, a garbage collection apparatus in Patent Literature 2 has a configuration of assigning points to a person having disposed of the garbage in accordance with the weight and quantity of discarded garbage.

### Citation List

### Patent Literature

Patent Literature 1: Japanese Unexamined Patent Application Publication No. 2008-168951
Patent Literature 2: Japanese Unexamined Patent Application Publication No. 2016-18290.
Patent Literature 3: CN111553354A. Summary of Invention

### Technical Problem

The garbage can in Patent Literature 1 has a configuration where, to reduce the load on a person disposing of garbage, the movable lid is automatically opened when the presence of a person is detected in front of the garbage can (i.e., a disposal place). It is desired to further reduce the load on a person disposing of garbage.

On the other hand, the garbage collection apparatus in Patent Literature 2 provides a person with an incentive for disposing of garbage, by assigning points to a person having disposed of the garbage, but has a problem in that a person disposing of garbage does not know the position of the garbage collection apparatus (i.e., disposal place) and the load on the person disposing of garbage is high. Patent Literature 3 discloses the features of the preamble of claims 1 and 6.

### Solution to Problem

An object of the present disclosure is to solve the problem described above, and to achieve a garbage disposal support apparatus and a garbage disposal support method that are capable of reducing the load on a person disposing of garbage Claims 1, 6 disclose the present invention. Preferred embodiments are disclosed in claims 2-5, 7-11.

A garbage disposal support apparatus according to an aspect of the present disclosure incudes:
a position obtaining unit configured to obtain position information about a person having an object;
an object image obtaining unit configured to obtain image information about the object that the person has;
a garbage determination unit configured to check the image information about the object that the person has against garbage image information stored in a database, and determine whether the object is garbage or not;
a route generation unit configured to generate route information to a disposal place of the garbage, based on the position information about the person and on disposal place information stored in the database, if the object is garbage; and
a transmitter unit configured to transmit the route information to a display apparatus.

A garbage disposal support method according to an aspect of the present disclosure incudes:
a step of obtaining position information about a person having an object;
a step of obtaining image information about the object that the person has;
a step of checking the image information about the object that the person has against garbage image information stored in a database, and determining whether the object is garbage or not;
a step of generating route information to a disposal place of the garbage, based on the position information about the person and on disposal place information stored in the database, if the object is garbage; and
a step of transmitting the route information to a display apparatus.

A garbage disposal support apparatus according to an aspect of the present disclosure incudes:
a terminal information obtaining unit configured to obtain ID information about a mobile terminal in a preset environment, and position information about the mobile terminal;
an image obtaining unit configured to obtain image information in the environment;
a garbage detection unit configured to detect garbage based on the image information in the environment, and obtain position information about the garbage;
a disposal place identification unit configured to identify a disposal place of the garbage, based on the position information about the garbage and on disposal place information stored in a database; and
a transmitter unit configured to transmit the position information about the garbage and the disposal place information to the mobile terminal.

A garbage disposal support method according to an aspect of the present disclosure incudes:
a step of obtaining ID information and position information about a mobile terminal in a preset environment;
a step of obtaining image information in the environment;
a step of detecting garbage based on the image information in the environment, and obtaining position information about the garbage;
a step of identifying a disposal place of the garbage, based on the position information about the garbage and on disposal place information stored in a database;
a step of transmitting the position information about the garbage and the disposal place information to the mobile terminal;
a step of confirming the mobile terminal owned by a person having disposed of the garbage at the disposal place, based on the image information in the environment and on the position information about the mobile terminal; and
a step of assigning a payment to the mobile terminal owned by the person having disposed of the garbage.

According to the present disclosure, a garbage disposal support apparatus and a garbage disposal support method that are capable of reducing the load on a person disposing of garbage can be achieved.

### Brief Description of the Drawings

Fig. 1 is a block diagram showing a configuration of a garbage disposal support system using a garbage disposal support apparatus according to a first embodiment.
Fig. 2 is a flowchart showing a flow of disposing of an object using the garbage disposal support system of the first embodiment.
Fig. 3 is a flowchart showing the flow of disposing of an object using the garbage disposal support system of the first embodiment.
Fig. 4 is a diagram conceptually showing a state where a person activates a support application of a mobile terminal.
Fig. 5 is a diagram conceptually showing a state where ID information about the mobile terminal and face image information about the person are obtained.
Fig. 6 is a diagram conceptually showing a state where a person entering a facility is imaged.
Fig. 7 is a diagram conceptually showing image information about the object extracted from image information about the inside of the facility.
Fig. 8 is a diagram conceptually showing a situation of checking the image information about the object against type-specific garbage image information and determining the type of the object.
Fig. 9 is a diagram conceptually showing a situation of identifying a disposal place based on object type information and garbage-type-specific disposal place information.
Fig. 10 is a diagram conceptually showing the mobile terminal when input of whether a route guide is required or not is prompted.
Fig. 11 is a diagram conceptually showing route information displayed on a display apparatus.
Fig. 12 is a diagram conceptually showing image information around the disposal place.
Fig. 13 is a diagram conceptually showing the mobile terminal when points are assigned.
Fig. 14 is a block diagram showing a configuration of a garbage disposal support system using a garbage disposal support apparatus according to a second embodiment.
Fig. 15 is a flowchart showing the flow of disposing of garbage using the garbage disposal support system of the second embodiment.
Fig. 16 is a flowchart showing the flow of disposing of garbage using the garbage disposal support system of the second embodiment.
Fig. 17 is a diagram conceptually showing a state where a person activates a support application of a mobile terminal.
Fig. 18 is a diagram conceptually showing a situation of detecting garbage from image information about the inside of a facility.
Fig. 19 is a diagram conceptually showing a situation of checking image information about garbage against type-specific garbage image information and determining the type of the garbage.
Fig. 20 is a diagram conceptually showing a situation of identifying a disposal place based on garbage type information and garbage-type-specific disposal place information.
Fig. 21 is a diagram conceptually showing a situation of selecting a participation applicant.
Fig. 22 is a diagram conceptually showing the mobile terminal when input of whether a route guide is required or not is prompted.
Fig. 23 is a diagram conceptually showing route information displayed on a display apparatus.
Fig. 24 is a diagram conceptually showing image information around the disposal place.
Fig. 25 is a diagram conceptually showing the mobile terminal when points are assigned.

### Description of Embodiments

Hereinafter, specific embodiments to which the present disclosure is applied are described in detail with reference to the drawings. Note that the present disclosure is not limited to the following embodiments. To clarify the description, the following description and drawings are appropriately simplified.

### <First Embodiment>

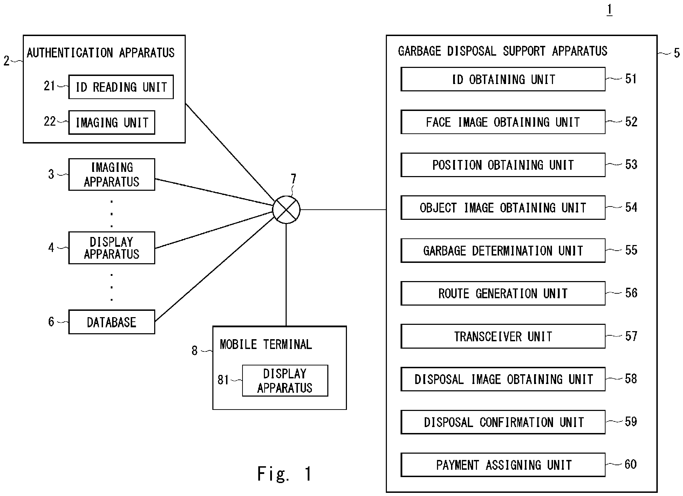

Fig. 1 is a block diagram showing a configuration of a garbage disposal support system using a garbage disposal support apparatus according to this embodiment. The garbage disposal support system 1 of this embodiment is suitable for guiding a person having an object that is garbage to a disposal place arranged in a facility, for example.

For example, as shown in Fig. 1, the garbage disposal support system 1 includes an authentication apparatus 2, an imaging apparatus 3, a display apparatus 4, a garbage disposal support apparatus 5 and a database 6, which are connected to each other by a network 7.

Here, the network 7 is, for example, the Internet, which is constructed by a telephone network, a wireless communication path, Ethernet (R) and the like. Note that the authentication apparatus 2, the imaging apparatus 3, the display apparatus 4, the garbage disposal support apparatus 5 and the database 6 may be connected to each other wiredly or wirelessly.

The authentication apparatus 2 is arranged at an entrance of a facility, for example. As shown in Fig. 1, the authentication apparatus 2 includes an ID reading unit 21 and an imaging unit 22. The ID reading unit 21 reads ID information about the mobile terminal 8 owned by a person entering the facility. The imaging unit 22 includes a camera and the like. The imaging unit 22 takes a face image of the person entering the facility, and associates the taken face image information with the ID information about the mobile terminal 8. Here, the mobile terminal 8 is a smartphone or a tablet PC (Personal Computer) connected to the network 7.

Note that the authentication apparatus 2 is only required to be capable of obtaining the ID information about the mobile terminal 8, and the face image information about the person owing the mobile terminal 8, and may obtain, for example, the ID information about the mobile terminal 8 preliminarily registered in the support application installed in the mobile terminal 8, and the face image information about the person owing the mobile terminal 8.

The imaging apparatus 3 includes a camera or the like, and images the inside of the facility. For example, the imaging apparatuses 3 are arranged along a passage of the facility so as to allow a person walking on the passage to be imaged, and is arranged around the disposal place of garbage arranged in the facility so as to be capable of imaging the disposal place and therearound. Thus, the multiple imaging apparatuses 3 are provided in the facility.

The display apparatus 4 displays at least one of disposal place information described later (i.e., position information about the disposal place) or route information. The display apparatus 4 includes, for example, a projecting apparatus, such as a projector, and is arranged along the passage of the facility so as to allow disposal place information or route information to be displayed on the passage, a wall or the like for a person walking on the passage.

For example, as shown in Fig. 1, the garbage disposal support apparatus 5 includes an ID obtaining unit 51, a face image obtaining unit 52, a position obtaining unit 53, an object image obtaining unit 54, a garbage determination unit 55, a route generation unit 56, a transceiver unit 57, a disposal image obtaining unit 58, a disposal confirmation unit 59, and a payment assigning unit 60.

The ID obtaining unit 51 obtains the ID information about the mobile terminal 8 read by the ID reading unit 21 of the authentication apparatus 2. Note that the ID obtaining unit 51 is only required to be capable of obtaining the ID information about the mobile terminal 8, and may include the ID reading unit 21, for example.

The face image obtaining unit 52 obtains the face image information about the person owing the mobile terminal 8 taken by the imaging unit 22 of the authentication apparatus 2. Note that the face image obtaining unit 52 is only required to be capable of obtaining the face image of the person owning the mobile terminal 8, and may include the imaging unit 22, for example.

The position obtaining unit 53 obtains position information about the person owing the mobile terminal 8 in the facility, based on the face image information about the person owning the mobile terminal 8 and on the image information about the inside of the facility taken by the imaging apparatus 3. For example, the position obtaining unit 53 checks the image information about the person captured in the image information about the inside of the facility taken by each imaging apparatus 3 against the face image information about the person owning the mobile terminal 8, and identifies the person owning the mobile terminal 8 in the image information, thereby obtaining the position information about the person. Note that the position obtaining unit 53 may obtain the position information about the person, based on position information through a GPS (Global Positioning System) receiver mounted on the mobile terminal 8.

The object image obtaining unit 54 obtains (extracts) image information about the object that the person owning the mobile terminal 8 has, by applying image processing to the image information about the inside of the facility taken by the imaging apparatus 3. The garbage determination unit 55 checks the image information about the object obtained by the object image obtaining unit 54 against garbage image information stored in the database 6, and determines whether the object is garbage or not. Preferably, at this time, the garbage determination unit 55 checks the image information about the object against type-specific garbage image information stored in the database 6, and determines the type of the object.

When the object is garbage, the route generation unit 56 identifies the disposal place of the object, based on the position information about the person owning the mobile terminal 8, on the disposal place information stored in the database 6 and on the facility passage information stored in the database 6, and generates the passage information to the disposal place.

Preferably, at this time, for example, the route generation unit 56 identifies a disposal place that makes the distance from the current position of the person to the disposal place of the object be that of the shortest route. Preferably, the route generation unit 56 identifies the disposal place of the object in consideration of object type information, garbage-type-specific disposal place information stored in the database. Note that the route generation unit 56 may generate the route information in response to a request by the person owning the mobile terminal 8.

The transceiver unit 57 is an interface with the network 7. The transceiver unit 57 receives the ID information about the mobile terminal 8 and the face image information about the person owning the mobile terminal 8 from the authentication apparatus 2, and receives the image information about the inside of the facility from the imaging apparatus 3. The transceiver unit 57 transmits the disposal place information identified by the route generation unit 56, or the route information generated by the route generation unit 56, to the display apparatus 4 or the mobile terminal 8.

The disposal image obtaining unit 58 obtains image information around the disposal place from the imaging apparatus 3 disposed at the disposal place so as to be capable of imaging the disposal place and therearound. Note that the disposal image obtaining unit 58 is only required to obtain image information around the disposal place, and may include, for example, an imaging apparatus 3 that images the disposal place and therearound. The disposal confirmation unit 59 confirms whether the person owning the mobile terminal 8 has disposed of the object at the disposal place or not based on the image information around the disposal place.

When the person owning the mobile terminal 8 disposes of the object at the disposal place, the payment assigning unit 60 assigns a payment to the person. For example, the payment assigning unit 60 transmits payment information for adding points or the like to the support application of the mobile terminal 8, through the transceiver unit 57.

Preferably, at this time, for example, the payment assigning unit 60 increases or reduces the amount of payment, based on the size of the object to be disposed of, whether the object is recyclable or not, the distance to the disposal place, the amount of baggage, the weather, or a time period after transmission of the disposal place information to disposal of the object. Note that the payment assigning unit 60 may transmit the payment information to a server or the like operated by a typical point site.

The database 6 stores the garbage image information, the disposal place information, and the facility passage information. Preferably, at this time, as described above, the database 6 stores the type-specific garbage image information, and the garbage-type-specific disposal place information. Here, for example, the garbage image information can be generated by supervised machine learning, based on the shape, color, material, recyclability and the like of garbage.

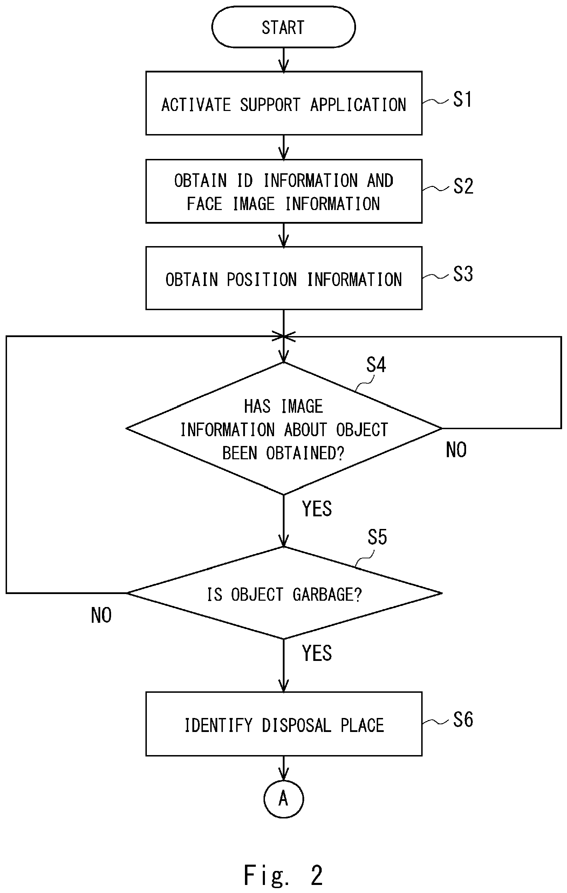

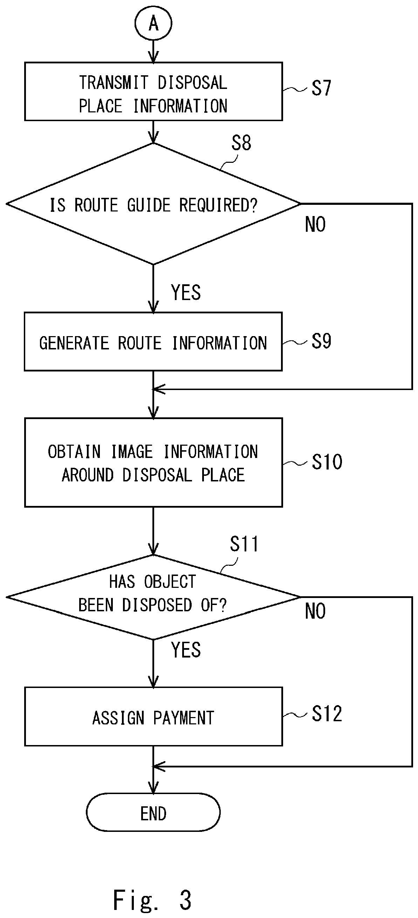

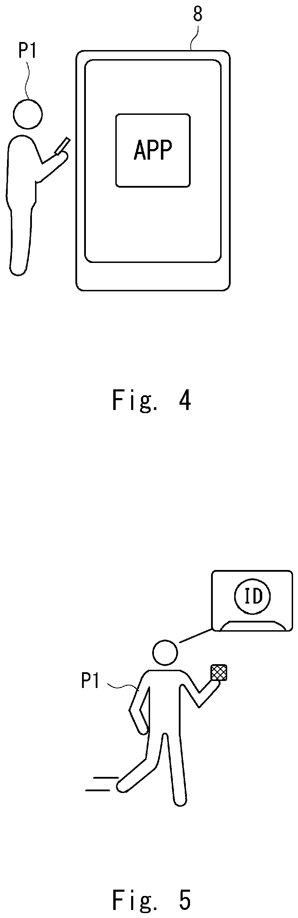

Next, a flow of disposing of an object using the garbage disposal support system 1 of this embodiment is described. Figs. 2 and 3 are flowcharts showing the flow of disposing of the object using the garbage disposal support system of this embodiment. Figs. 4 to 13 are diagrams conceptually showing the situation of each step.

First, as shown in Fig. 4, a person P1 owning the mobile terminal 8 activates the support application of the mobile terminal 8 (S1). Here, in Fig. 4, the situation of the person P1 owning the mobile terminal 8 is shown on the left side, and the situation where the support application of the mobile terminal 8 is shown on the right side. After the person P1 enters the range preset for the entrance of the facility, the ID reading unit 21 of the authentication apparatus 2 reads the ID information about the mobile terminal 8 from the mobile terminal 8.

The imaging unit 22 of the authentication apparatus 2 takes a face image of the person P1, and associates face image information about the person P1 with the ID information about the mobile terminal 8. The authentication apparatus 2 transmits the ID information about the mobile terminal 8 and the face image information about the person P1 owning the mobile terminal 8, to the garbage disposal support apparatus 5.

Accordingly, as shown in Fig. 5, the ID obtaining unit 51 of the garbage disposal support apparatus 5 obtains the ID information about the mobile terminal 8 (S2). The face image obtaining unit 52 of the garbage disposal support apparatus 5 obtains the face image information about the person P1 owning the mobile terminal 8 associated with the ID information about the mobile terminal 8.

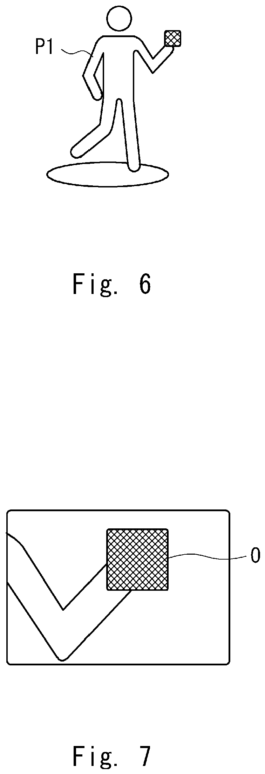

Next, as shown in Fig. 6, the imaging apparatus 3 takes an image in the facility, and transmits the image information about the inside of the facility to the garbage disposal support apparatus 5. The position obtaining unit 53 of the garbage disposal support apparatus 5 checks the face image information about the person P1 against the image information about the inside of the facility taken by the imaging apparatus 3, and obtains position information about the person P1 in the facility (S3). Note that obtainment of the position information about the person P1 by the position obtaining unit 53 is continued until the person P1 disposes of the object.

Next, the object image obtaining unit 54 of the garbage disposal support apparatus 5 tries to obtain the image information about the object that the person P1 has, by applying image processing to the image information about the inside of the facility taken by the imaging apparatus 3 (S4). When the image information about the object is not obtained from the image information about the inside of the facility taken by the imaging apparatus 3 (NO in S4), the garbage disposal support apparatus 5 returns the processing to step S4.

On the other hand, as shown in Fig. 7, when the image information about the object O is obtained from the image information about the inside of the facility taken by the imaging apparatus 3, the garbage determination unit 55 of the garbage disposal support apparatus 5 checks the image information about the object O taken by the object image obtaining unit 54 against the garbage image information stored in the database 6, and determines whether the object O is garbage or not (S5).

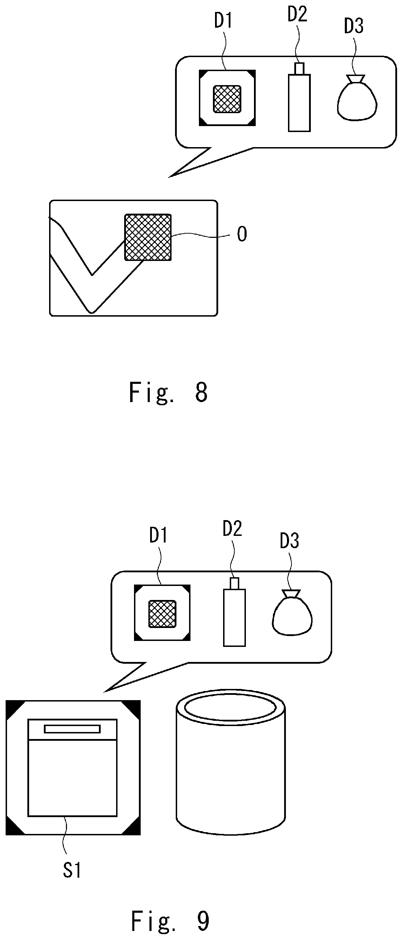

Preferably, at this time, as described above, the garbage determination unit 55 of the garbage disposal support apparatus 5 checks the image information about the object O against the type-specific garbage image information stored in the database 6, and not only determines whether the object O is garbage or not but also determines the garbage type of the object O, as shown in Fig. 8.

Fig. 8 shows the situation of determining that the object O is first type garbage D 1, as a result of checking image information about first type (e.g., non-combustible garbage) garbage D1, image information about second type (e.g., PET bottle) garbage D2, and image information about third type (e.g., combustible garbage) garbage D3 stored in the database 6, against the image information about the object O.

When the object O is not garbage (NO in S5), the garbage disposal support apparatus 5 returns the processing to S4. On the other hand, when the object O is garbage (YES in S5), the route generation unit 56 of the garbage disposal support apparatus 5 identifies the disposal place of the object O, based on the position information about the person P1, on the disposal place information stored in the database 6 and on the facility passage information stored in the database 6.

Preferably, as described above, when the type of the object O is determined, the route generation unit 56 identifies the disposal place S 1 in consideration of type information about the object O, garbage-type-specific disposal place information stored in the database 6, as shown in Fig. 9.

Next, the transceiver unit 57 of the garbage disposal support apparatus 5 transmits the disposal place information to the mobile terminal 8 owned by the person P1 (S7). The mobile terminal 8 then displays the disposal place information about the object on a display apparatus 81, and prompts the person P1 to input whether a route guide to the disposal place S1 is required or not (S8). Note that the garbage disposal support apparatus 5 may transmit the disposal place information to the display apparatus 4, and transmit, to the mobile terminal 8, the information for urging input of whether the route guide to the disposal place S1 is required or not.

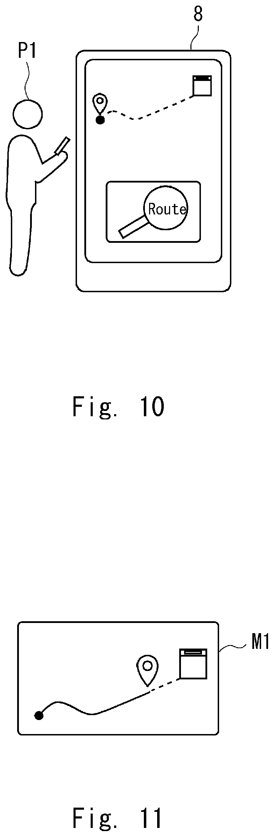

As shown in Fig. 10, when the person P1 inputs a reply that the route guide is required, through the support application of the mobile terminal 8 (in Fig. 10, for example, contact with a "Route" part displayed on the display apparatus 81 of the mobile terminal 8) (YES in S8), the route generation unit 56 of the garbage disposal support apparatus 5 generates the route information from the current position of the person P1 to the disposal place S1, and transmits the route information to the display apparatus 4 through the transceiver unit 57 (S9).

Here, in Fig. 10, the situation of the person P1 owning the mobile terminal 8 is shown on the left side, and the mobile terminal 8 when input of whether the route guide is required or not is prompted is shown on the right side. As shown in Fig. 11, the display apparatus 4 displays route information M1. Accordingly, the person P1 can recognize the position and the route of the disposal place S 1 of the object O. Preferably, here, as shown in Fig. 11, besides the route guide connecting a point of start of the route guide and the disposal place S1, the current position of the person P1 on the guide route is shown in the route information M1.

Preferably, at this time, based on the position information about the person P1 in the facility, the transceiver unit 57 transmits the route information M1 to the display apparatus 4 arranged close to the person P1 on the movement direction side of the person P1 among display apparatuses 4, thus causing the display apparatus 4 to display the route information M1 depending on the movement of the person P1. Accordingly, depending on the movement of the person P1, the disposal place information and the route information can be displayed on the display apparatus 4.

The transceiver unit 57 may transmit the route information M1 to the display apparatus 81 of the mobile terminal 8, thus causing the display apparatus 81 to display the route information M1, as shown in Fig. 10. Note that the transceiver unit 57 may transmit the disposal place information or the route information M1 to any one of the display apparatus 4 or the display apparatus 81 of the mobile terminal 8.

Next, the disposal image obtaining unit 58 of the garbage disposal support apparatus 5 obtains image information around the disposal place S1 from the imaging apparatus 3 disposed at the disposal place S1 so as to be capable of imaging the disposal place S1 and therearound (S10). Here, when the person P1 inputs a reply that the route guide is not required through the support application of the mobile terminal 8 (NO in S8), the garbage disposal support apparatus 5 makes the process transit to step S10.

Next, the disposal confirmation unit 59 of the garbage disposal support apparatus 5 confirms whether the person P1 has disposed of the object O at the disposal place S1, based on the obtained image information around the disposal place S1 (S11). That is, the disposal confirmation unit 59 confirms whether the person P1 captured in the image around the disposal place S1 has disposed of the object O at the disposal place S1 or not, based on the position information about the person P1, on the image information about the object O and on the image information around the disposal place S1.

Preferably, at this time, the disposal confirmation unit 59 checks the face image information about the person P1 against the image information around the disposal place S1, and confirms that the person having disposed of the object O is the person P1 owning the mobile terminal 8 in consideration of the check result.

If it cannot be confirmed that the person P1 has disposed of the object O at the disposal place S1 until a preset first time period elapses after transmission of the route information M1 by the transceiver unit 57 to the display apparatus 4 (NO in S11), the garbage disposal support apparatus 5 finishes the support process.

Preferably, at this time, if the person P1 does not dispose of the object O at the disposal place S1 until a preset second time period elapses after transmission of the route information M1 by the transceiver unit 57 to the display apparatus 4, the disposal confirmation unit 59 transmits demand notice information for urging disposal of the object O to the mobile terminal 8 through the transceiver unit 57. Preferably, here, the second time period is shorter time period in comparison with the first time period.

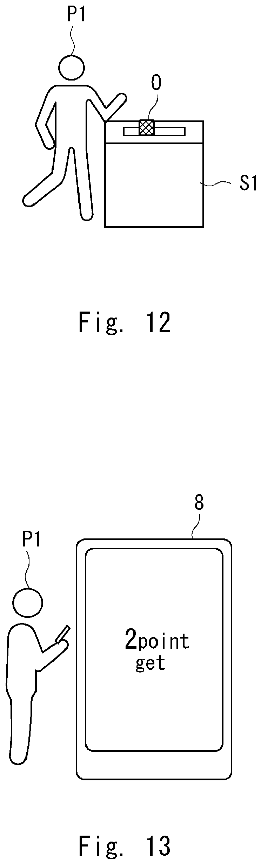

On the other hand, as shown in Fig. 12, if it is confirmed that the object O has been disposed of at the disposal place (YES in S11), the payment assigning unit 60 of the garbage disposal support apparatus 5 assigns a payment to the person P1 (S12).

For example, as shown in Fig. 13, the payment assigning unit 60 transmits payment information for adding points or the like to the support application of the mobile terminal 8, through the transceiver unit 57. Preferably, at this time, the payment assigning unit 60 generates payment information to be assigned, based on the garbage type information about the object O, on the image information about the inside of the facility and on weather information obtained from the outside. Here, in Fig. 13, the situation of the person P1 owning the mobile terminal 8 is shown on the left side, and the mobile terminal 8 when points are assigned is shown on the right side.

As described above, the garbage disposal support apparatus 5 and the garbage disposal support method in this embodiment can allow the person P1 having the object O to recognize the position of the disposal place S1 of the object O. Thus, the load on the person P1 disposing of the object O can be reduced. In particular, when the person P1 wishes a route guide, the route information M1 is displayed on the display apparatus. Accordingly, the load on the person P1 disposing of the object O can be further reduced.

Furthermore, when the person P1 having the object O does not dispose of the object O at the disposal place S1, the garbage disposal support apparatus 5 and the garbage disposal support method in this embodiment transmit the demand notice information for urging disposal of the object O to the mobile terminal 8 owned by the person P1, which can prevent illegal dumping of the object O.

The garbage disposal support apparatus 5 and the garbage disposal support method in this embodiment check the face image information about the person P1 owning the mobile terminal 8 against the image information around the disposal place S1, and confirm that the person having disposed of the object O is the person P1 owning the mobile terminal 8 in consideration of the check result. Accordingly, it can be securely confirmed whether the person P1 owning the mobile terminal 8 has disposed of the object O or not.

The garbage disposal support apparatus 5 and the garbage disposal support method in this embodiment can cause the display apparatus 4 arranged close to the person P1 on the movement direction side of the person P1 having the object O among the display apparatuses 4 to display route information M1, and thus cause not all the display apparatuses 4 to display the route information, thereby contributing to reduction in power consumption.

The garbage disposal support apparatus 5 and the garbage disposal support method in this embodiment assign a payment to the person P1 having disposed of the object O at the disposal place S1. Accordingly, the person P1 can enjoyably dispose of the object O with game feeling.

The garbage disposal support apparatus 5 and the garbage disposal support method in this embodiment determine the type of the object O, and identify the disposal place S1 in accordance with the type of the object O, thereby allowing the object O to be disposed of in a segregated manner.

Note that for example, the garbage disposal support apparatus 5 of the embodiment described above includes the ID obtaining unit 51, the face image obtaining unit 52, the disposal image obtaining unit 58, the disposal confirmation unit 59 and the payment assigning unit 60. Some or all of the ID obtaining unit 51, the face image obtaining unit 52, the disposal image obtaining unit 58, the disposal confirmation unit 59 and the payment assigning unit 60 may be omitted.

For example, according to the embodiment described above, the route information M1 is generated after the person P1 is prompted to reply about whether the route guide is required or not. Alternatively, the route information M1 may be generated without prompting the person P1 to reply about whether the route guide is required or not.

For example, according to the embodiment described above, the description is made assuming that the person moving in the facility disposes of the object. However, there is no limitation to the inside of the facility. Even at the outside, implementation can be achieved in a substantially similar manner.

### <Second Embodiment>

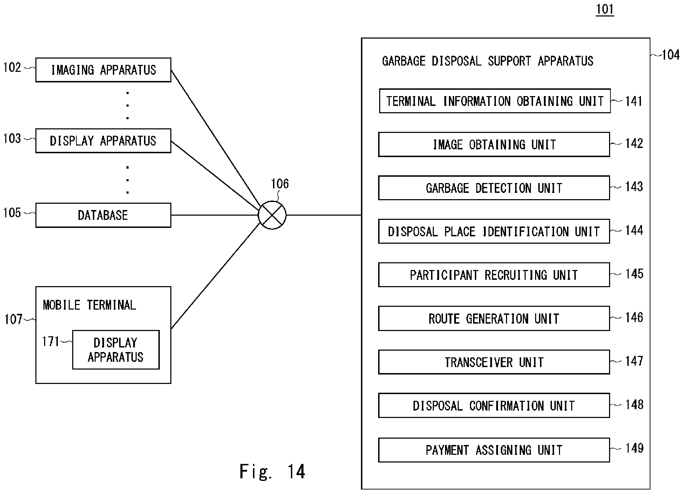

Fig. 14 is a block diagram showing a configuration of a garbage disposal support system using a garbage disposal support apparatus according to this embodiment. For example, the garbage disposal support system 101 of this embodiment provides a person with an incentive to dispose of garbage at a disposal place in a facility that is a type of a preset environment, and can be used to allow a person disposing of garbage to recognize the position of the disposal place at this opportunity.

For example, as shown in Fig. 14, the garbage disposal support system 101 includes an imaging apparatus 102, a display apparatus 103, a garbage disposal support apparatus 104 and a database 105, which are connected to each other by a network 106.

The imaging apparatus 102 images the inside of the facility. For example, the imaging apparatuses 102 are arranged along a passage of the facility so as to allow the passage to be imaged, and is arranged around the disposal place of garbage arranged in the facility so as to be capable of imaging the disposal place and therearound. Thus, the multiple imaging apparatuses 102 are provided in the facility.

Similar to the display apparatus 4 of the first embodiment, the display apparatus 103 displays disposal place information about garbage or route information, which will be described later. As shown in Fig. 14, the garbage disposal support apparatus 104 includes, for example, a terminal information obtaining unit 141, an image obtaining unit 142, a garbage detection unit 143, a disposal place identification unit 144, a participant recruiting unit 145, a route generation unit 146, a transceiver unit 147, a disposal confirmation unit 148, and a payment assigning unit 149.

The terminal information obtaining unit 141 obtains ID information and position information about a mobile terminal 107 in the facility, from the mobile terminal 107. Here, the mobile terminal 107 is a smartphone or a tablet PC connected to the network 106. For example, the position information about the mobile terminal 107 can be obtained based on position information, such as about a GPS receiver mounted on the mobile terminal 107, and is associated with the ID information about the mobile terminal 107.

The image obtaining unit 142 obtains image information about the inside of the facility taken by the imaging apparatus 102. Note that the image obtaining unit 142 is only required to be capable of obtaining the image information about the inside of the facility, and may include the imaging apparatus 102, for example. The garbage detection unit 143 checks the image information about the inside of the facility against garbage image information stored in the database 105, and detects the garbage in the facility and obtains position information about the garbage.

Preferably, for example, the garbage detection unit 143 detects the garbage by applying image processing to the image information about the inside of the facility taken by imaging apparatuses 102, and obtains the position information about the garbage in the facility, based on the position information about the imaging apparatuses 102 having taken the image information where the garbage has been detected and on the position information about the garbage in the image information.

Preferably, here, the garbage detection unit 143 checks the image information about the garbage extracted from the image information about the inside of the facility against type-specific garbage image information stored in the database 105, and determines the type of the garbage.

The disposal place identification unit 144 identifies the disposal place of the garbage, based on the position information about the garbage in the facility and on the disposal place information stored in a database 105. Preferably, at this time, the disposal place identification unit 144 identifies the disposal place closest to the garbage in consideration of the route information in the facility stored in the database 105. Preferably, the disposal place identification unit 144 identifies the disposal place of the garbage in consideration of garbage type information and on garbage-type-specific disposal place information stored in the database 105.

The participant recruiting unit 145 generates recruiting information for recruiting participation applicants for a garbage disposal operation, and transmits the recruiting information to the mobile terminal 107 in the facility through the transceiver unit 147. The participant recruiting unit 145 then selects a person to dispose of garbage from among applying participation applicants. Preferably, for example, the participant recruiting unit 145 transmits the recruiting information to the mobile terminal 107 that is present in a range preset for the garbage, based on the position information about the mobile terminal 107 and on the position information about the garbage.

Preferably, the participant recruiting unit 145 selects a person owning the mobile terminal 107 that is present closest to the garbage as a person to dispose of garbage from among the participation applicants, based on the position information about the mobile terminal 107 and on the position information about the garbage in the facility.

Preferably, at this time, the recruiting information is displayed on a display apparatus 171 by a support application installed in the mobile terminal 107, and the participation applicant for the garbage disposal operation inputs a reply about wishing participation through the mobile terminal 107, thus transmitting participation application information to the garbage disposal support apparatus 104.

The route generation unit 146 generates route information for disposal of garbage, based on the position information about the mobile terminal 107 owned by the selected person, on the route information stored in the database 105 and on the identified disposal place information. Note that the route generation unit 146 may generate the route information in response to a request by the selected person, for example.

The transceiver unit 147 is an interface with the network 106. The transceiver unit 147 receives the ID information and the position information from the mobile terminal 107, receives the image information about the inside of the facility from the imaging apparatus 102, and receives the participation application information from the mobile terminal 107. The transceiver unit 147 transmits the disposal place information or the route information to the display apparatus 103 or the mobile terminal 107, and transmits the position information about the garbage and the recruiting information to the mobile terminal 107.

The disposal confirmation unit 148 confirms the mobile terminal 107 owned by the person having disposed of the garbage at the disposal place, based on the image information about the inside of the facility and on the position information about the mobile terminal 107 owned by the selected person. Preferably, for example, the disposal confirmation unit 148 confirms the mobile terminal 107 of which position information indicates the disposal place and therearound and which is owned by the person having disposed of the garbage at the disposal place from the image around the disposal place, based on the position information about the mobile terminal 107 owned by the selected person, on the image information about the garbage and on the image information around the disposal place in the facility.

When the selected person disposes of the garbage at the disposal place, the payment assigning unit 149 assigns a payment to the mobile terminal 107 owned by the person. For example, the payment assigning unit 149 transmits payment information for adding points or the like, to the support application of the mobile terminal 107, through the transceiver unit 147.

Preferably, at this time, for example, the payment assigning unit 149 increases or reduces the amount of payment, based on the size of the garbage, whether the object is recyclable or not, the distance to the disposal place, the amount of baggage of the selected person, the weather, or a time period after transmission of the position information about the garbage to disposal of the garbage. Note that the payment assigning unit 149 may transmit the payment information to a server or the like operated by a typical point site.

The database 105 stores the garbage image information, the disposal place information, and the facility passage information. Preferably, at this time, as described above, the database 105 stores the type-specific garbage image information, and the garbage-type-specific disposal place information. Here, for example, the garbage image information can be generated by supervised machine learning, based on the shape, color, material, recyclability and the like of garbage.

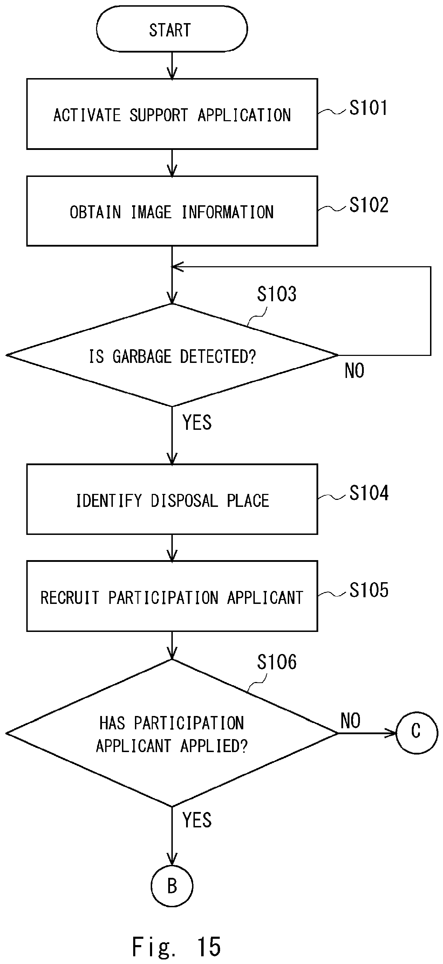

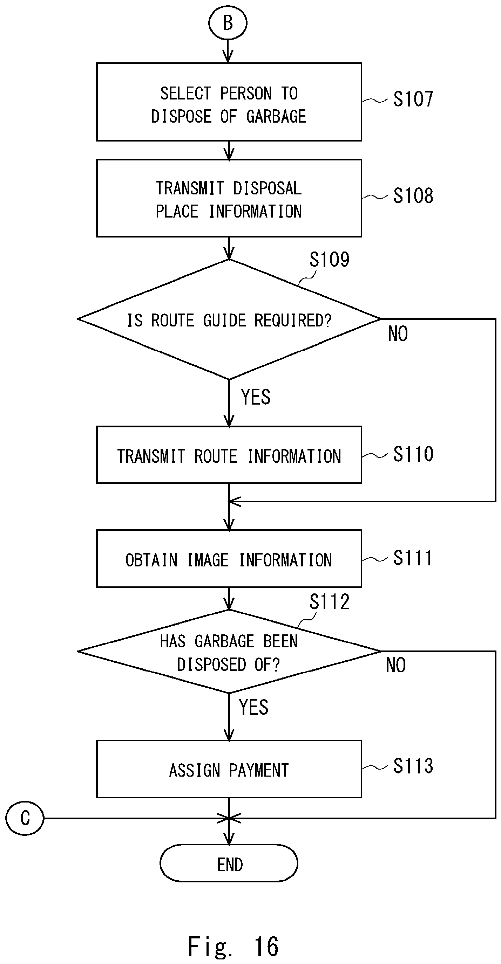

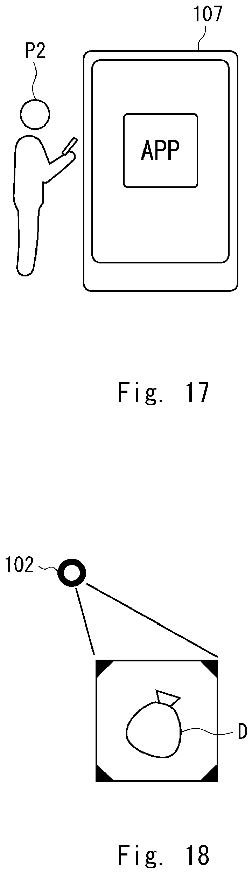

Next, a flow of disposing of garbage using the garbage disposal support system 101 of this embodiment is described. Figs. 15 and 16 are flowcharts showing the flow of disposing of the garbage using the garbage disposal support system of this embodiment. Figs. 17 to 25 are diagrams conceptually showing the situation of each step.

First, as shown in Fig. 17, a person P2 owning the mobile terminal 107 activates the support application of the mobile terminal 107 (S101). Here, in Fig. 17, the situation of the person P2 owning the mobile terminal 107 is shown on the left side, and the situation where the support application of the mobile terminal 107 is activated is shown on the right side. When the person P2 owning the mobile terminal 107 enters the facility, the terminal information obtaining unit 141 of the garbage disposal support apparatus 104 obtains the ID information and the position information about the mobile terminal 107.

Next, the imaging apparatus 102 takes an image in the facility, and transmits the image information about the inside of the facility to the garbage disposal support apparatus 104. Accordingly, the image obtaining unit 142 of the garbage disposal support apparatus 104 obtains the image information about the inside of the facility (S102). Here, the obtainment of the image in the facility continues while the facility is open.

Next, the garbage detection unit 143 of the garbage disposal support apparatus 104 checks the image information about the inside of the facility against garbage image information stored in the database 105, and determines whether garbage in the facility is detected or not (S103). When garbage is not detected (NO in S103), the garbage disposal support apparatus 104 returns the processing to S103.

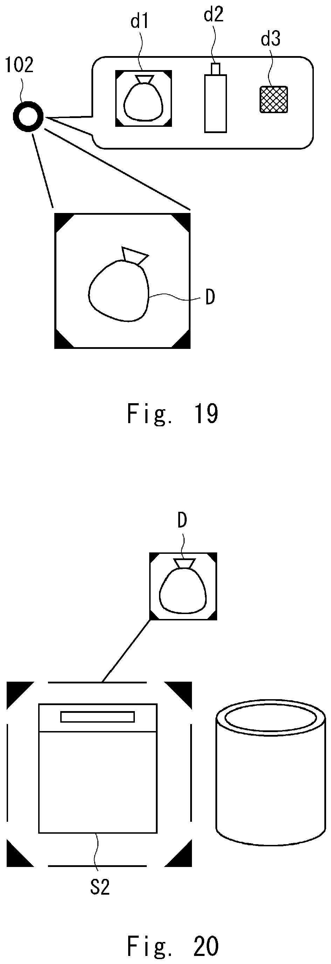

On the other hand, when garbage D is detected as shown in Fig. 18 (YES in S103), the garbage detection unit 143 obtains position information about the garbage D. Preferably, as described above, the garbage detection unit 143 checks the image information about the garbage D extracted from the image information about the inside of the facility against type-specific garbage image information stored in the database 105, and determines the type of the garbage D as shown in Fig. 19.

Fig. 19 shows the situation of determining that the garbage D is first type garbage d1, as a result of checking image information about first type (e.g., combustible garbage) garbage d1, image information about second type (e.g., PET bottle) garbage d2, and image information about third type (e.g., non-combustible garbage) garbage d3 stored in the database 105, against image information about the garbage D.

The disposal place identification unit 144 of the garbage disposal support apparatus 104 identifies the disposal place of the garbage D, based on the position information about the garbage D in the facility and on the disposal place information stored in the database 105 (S104). Preferably, as described above, a disposal place S2 of the garbage D is identified in consideration of type information about the garbage D, and garbage-type-specific disposal place information stored in the database 105, as shown in Fig. 20.

The participant recruiting unit 145 of the garbage disposal support apparatus 104 generates recruiting information for recruiting participation applicants for a disposal operation for the garbage D, and transmits the recruiting information to the mobile terminal 107 in the facility through the transceiver unit 147 (S105). The participant recruiting unit 145 determines whether there is an application of a participation applicant or not (S106).

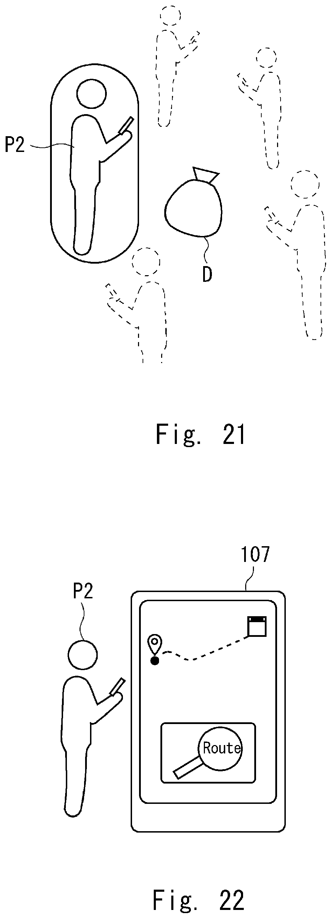

If there is not an application of a participation applicant (NO in S106), the garbage disposal support apparatus 104 finishes the support process. Note that if there is no application by the participation applicant, the participant recruiting unit 145 may recruit participation applicants again. On the other hand, if there is a participation applicant has applied (YES in S106), the participant recruiting unit 145 selects the person P2 to dispose of the garbage D from among the applying participation applicants as shown in Fig. 21 (S107).

Next, the transceiver unit 147 of the garbage disposal support apparatus 104 transmits the position information about the garbage and the disposal place information about the garbage D to the mobile terminal 107 owned by the person P2 (S108). The mobile terminal 107 then displays the disposal place information about the object D on the display apparatus 171, and prompts the person P2 to input whether a route guide to the disposal place is required or not (S109). Note that the garbage disposal support apparatus 104 may transmit the disposal place information to the display apparatus 103, and transmit, to the mobile terminal 107, the information for prompting input of whether the route guide to the disposal place S2 is required or not.

As shown in Fig. 22, when the person P2 inputs a reply that the route guide is required, through the support application of the mobile terminal 107 (in Fig. 22, contact with a "Route" part displayed on the display apparatus 171 of the mobile terminal 107) (YES in S109), the route generation unit 146 of the garbage disposal support apparatus 104 generates the route information M2 from the current position of the person P2 to the disposal place S2, and transmits the route information M2 to the display apparatus 103 through the transceiver unit 147 (S110).

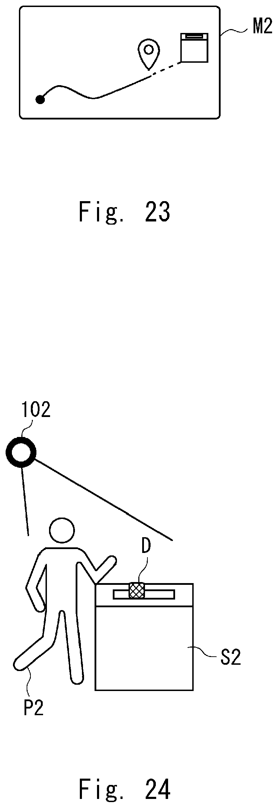

Here, in Fig. 22, the situation of the person P2 owning the mobile terminal 107 is shown on the left side, and the mobile terminal 107 when input of whether the route guide is required or not is prompted is shown on the right side. As shown in Fig. 23, the display apparatus 103 displays route information M2. Accordingly, the person P2 can recognize the position and the route of the disposal place S2. Preferably, here, as shown in Fig. 23, besides the route guide connecting the point of start of the route guide and the disposal place S2, the current position of the person P2 on the guide route is shown in the route information M2.

Preferably, at this time, based on the position information about the person P2 in the facility, the transceiver unit 147 transmits the route information M2 to the display apparatus 103 arranged close to the person P2 on the movement direction side of the person P2 among display apparatuses 103, and causes the display apparatus 103 to display the route information M2 depending on the movement of the person P2. Accordingly, depending on the movement of the person P2, the disposal place information and the route information can be displayed on the display apparatus 103.

The transceiver unit 147 may transmit the route information M2 to the mobile terminal 107, thus causing the display apparatus 171 of the mobile terminal 107 to display the route information M2, as shown in Fig. 22. Note that the transceiver unit 147 may transmit the disposal place information or the route information M2 to any one of the display apparatus 103 or the display apparatus 171 of the mobile terminal 107.

Next, the image obtaining unit 142 of the garbage disposal support apparatus 104 obtains image information around the disposal place S2 from the imaging apparatus 102 disposed at the disposal place S2 so as to be capable of imaging the disposal place S2 and therearound (S111). Here, when the person P2 inputs a reply that the route guide is not required through the support application of the mobile terminal 107 (NO in S109), the garbage disposal support apparatus 104 makes the process transit to step S111.

Next, the disposal confirmation unit 148 of the garbage disposal support apparatus 104 confirms the mobile terminal 107 owned by the person P2 having disposed of the garbage D at the disposal place S2, based on the obtained image information around the disposal place S2 (S112). If the mobile terminal 107 owned by the person P2 having disposed of the garbage D at the disposal place S2 cannot be confirmed until the preset first time period elapses after transmission of the route information M2 by the transceiver unit 147 to the display apparatus 103 (NO in S112), the garbage disposal support apparatus 104 finishes the support process.

Preferably, at this time, if the mobile terminal 107 owned by the person P2 having disposed of the garbage D at the disposal place S2 cannot be confirmed until the preset second time period elapses after transmission of the route information M2 by the transceiver unit 147 to the display apparatus 103, the disposal confirmation unit 148 transmits demand notice information for urging disposal of the garbage D to the mobile terminal 107 through the transceiver unit 147. Preferably, here, the second time period is shorter time period in comparison with the first time period.

On the other hand, as shown in Fig. 24, if the mobile terminal 107 owned by the person P2 having disposed of the garbage D at the disposal place S2 is confirmed (YES in S112), the payment assigning unit 149 of the garbage disposal support apparatus 104 assigns a payment to the mobile terminal 107 owned by the person P2 (S113).

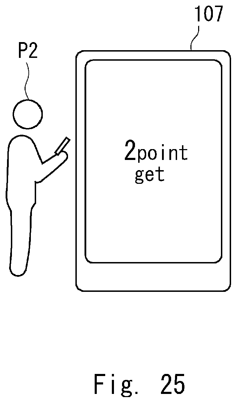

For example, as shown in Fig. 25, the payment assigning unit 149 transmits payment information for adding points or the like to the support application of the mobile terminal 107, through the transceiver unit 147. Preferably, at this time, the payment assigning unit 149 generates payment information to be assigned, based on the garbage type information about the garbage D, on the image information about the inside of the facility and on weather information obtained from the outside. Here, in Fig. 25, the situation of the person P2 owning the mobile terminal 107 is shown on the left side, and the mobile terminal 107 when points are assigned is shown on the right side.

As described above, the garbage disposal support apparatus 104 and the garbage disposal support method in this embodiment can provide the person P2 with an incentive for disposing of the garbage D by assigning the payment to the person P2 having disposed of the garbage D, and allow the person P2 to recognize the position of the disposal place S2 of the garbage D when the person P2 disposes of the garbage D, thus allowing the load on the person P2 disposing the garbage D to be reduced.

Furthermore, the garbage disposal support apparatus 104 and the garbage disposal support method in this embodiment recruit participation applicants for the disposal operation of the garbage D. Accordingly, the participation applicants can apply for the disposal operation of the garbage D with game feeling to obtain a payment. At this time, if the person P2 owning the mobile terminal 107 that is present closest to the garbage is selected as the person to dispose of the garbage D, the garbage D can be effectively disposed of.

The garbage disposal support apparatus 104 and the garbage disposal support method in this embodiment determine the type of the garbage D, and identify the disposal place in accordance with the type of the garbage D, thereby allowing the garbage D to be disposed of in a segregated manner.

For example, the garbage disposal support apparatus 104 and the garbage disposal support method in this embodiment generate the route information M2 to the disposal place of the garbage D in response to the request by the person P2 to dispose of the garbage D, and cause the display apparatus 103 or the display apparatus 171 of the mobile terminal 107 to display the information, which can further reduce the load on the person P2 disposing of the garbage D.

At this time, among the display apparatuses 103, the display apparatus 103 arranged close to the person P2 on the movement direction side of the person P2 is caused to display the route information M2, which can contribute to reduction in power consumption in comparison with a case where the route information M2 is displayed on all the display apparatuses 103 at the same time.

Furthermore, when the person P2 to dispose of the garbage D does not actually dispose of the garbage D at the disposal place S2, the garbage disposal support apparatus 104 and the garbage disposal support method in this embodiment transmit the demand notice information for urging disposal of the garbage D to the mobile terminal 107 owned by the person P2, which can prevent illegal dumping of the garbage D.

Note that for example, the garbage disposal support apparatus 104 of the embodiment described above includes the participant recruiting unit 145 and the route generation unit 146. However, one or both of the participant recruiting unit 145 and the route generation unit 146 may be omitted.

For example, according to the embodiment described above, the route information M2 is generated after the person P2 is prompted to reply about whether the route guide is required or not. Alternatively, the route information M2 may be generated without prompting the person P2 to reply about whether the route guide is required or not.

For example, according to the embodiments described above, the description is made assuming that the garbage in the facility is disposed of. However, there is no limitation to the inside of the facility. Even at the outside, implementation can be achieved in a substantially similar manner.

For example, according to the embodiments described above, the mobile terminal owned by the person having disposed of the garbage at the disposal place is confirmed, and the payment is assigned when the selected person disposes of the garbage at the disposal place. However, these may be omitted, or any of them may be omitted.

The present disclosure is not limited to the embodiments described above, and can be appropriately changed in a range.

For example, according to the embodiments described above, the present disclosure is described as the hardware configuration. However, the present disclosure is not limited thereto. According to the present disclosure, any process can also be achieved by causing a CPU (Central Processing Unit) to execute a computer program.

The programs are stored using various types of non-transitory computer-readable media, and can be supplied to computers. The non-transitory computer-readable media include various types of tangible storage media. Examples of the non-transitory computer-readable media include a magnetic recording medium (e.g., a flexible disk, a magnetic tape, and a hard disk drive), a magnetooptical recording medium (e.g., a magnetooptical disk), a CD-ROM (Read Only Memory), a CD-R, a CD-R/W, a semiconductor memory (e.g., a mask ROM, a PROM (Programmable ROM), an EPROM (Erasable PROM), a flash ROM, and a RAM (random access memory)). The programs may be provided for the computer through various types of transitory computer readable media. Examples of transitory computer readable media include an electric signal, an optical signal, and electromagnetic waves. The transitory computer readable media can provide programs for the computer via a wired communication path, such as an electric wire or an optical fiber, or a wireless communication path.

This application claims the priority of Japanese Patent Application Nos. 2021-42271 and 2021-42272, filed March. 16, 2021.

### Industrial Applicability

The present disclosure can be used as a garbage disposal support apparatus and a garbage disposal support method for allowing a person to recognize the position of a disposal place of garbage.

### Reference Signs List

1 GARBAGE DISPOSAL SUPPORT SYSTEM
2 AUTHENTICATION APPARATUS, 21 ID READING UNIT, 22 IMAGING UNIT
3 IMAGING APPARATUS
4 DISPLAY APPARATUS
5 GARBAGE DISPOSAL SUPPORT APPARATUS
51 ID OBTAINING UNIT, 52 FACE IMAGE OBTAINING UNIT, 53 POSITION OBTAINING UNIT, 54 OBJECT IMAGE OBTAINING UNIT, 55 GARBAGE DETERMINATION UNIT, 56 ROUTE GENERATION UNIT, 57 TRANSCEIVER UNIT, 58 DISPOSAL IMAGE OBTAINING UNIT, 59 DISPOSAL CONFIRMATION UNIT, 60 PAYMENT ASSIGNING UNIT
6 DATABASE
7 NETWORK
8 MOBILE TERMINAL, 81 DISPLAY APPARATUS
101 GARBAGE DISPOSAL SUPPORT SYSTEM
102 IMAGING APPARATUS
103 DISPLAY APPARATUS
104 GARBAGE DISPOSAL SUPPORT APPARATUS, 141 TERMINAL INFORMATION OBTAINING UNIT, 142 IMAGE OBTAINING UNIT, 143 GARBAGE DETECTION UNIT, 144 DISPOSAL PLACE IDENTIFICATION UNIT, 145 PARTICIPANT RECRUITING UNIT, 146 ROUTE GENERATION UNIT, 147 TRANSCEIVER UNIT, 148 DISPOSAL CONFIRMATION UNIT, 149 PAYMENT ASSIGNING UNIT
105 DATABASE
106 NETWORK
107 MOBILE TERMINAL, 171 DISPLAY APPARATUS
M1, M2 ROUTE INFORMATION
O OBJECT
P1, P2 PERSON
S1, S2 DISPOSAL PLACE
D GARBAGE

## Claims

1. A garbage disposal support (5) apparatus, comprising:
a position obtaining unit (53) configured to obtain position information about a person (P1) having an object (O);
an object image obtaining unit (54) configured to obtain image information about the object (O) that the person (P1) has;
a garbage determination unit (55) configured to check the image information about the object (O) that the person (P1) has against garbage image information stored in a database (6) and determine whether the object (O) is garbage or not;
a route generation unit (56) configured to generate route information (M1) to a disposal place (S1) of the garbage, based on the position information about the person (P1) and on disposal place information stored in the database (6), if the object (O) is garbage; and
a transmitter unit (57) configured to transmit the route information (M1) to a display apparatus (4,81);
the apparatus **characterized in that**:
a disposal image obtaining unit (58) configured to obtain image information about the disposal place (S1); and
a disposal confirmation unit (59) configured to confirm whether the person (P1) has disposed of the object (O) at the disposal place (S1) or not, based on the position information about the person (P1) and on the image information about the disposal place (S1).

2. The garbage disposal support apparatus according to Claim 1, further comprising an ID obtaining unit (51) configured to obtain ID information about a mobile terminal (8) owned by the person (P1),
wherein if the person (P1) does not dispose of the object (O) at the disposal place (S1) in a preset time period, the disposal confirmation unit (59) transmits demand notice information for urging disposal of the object (O), to the mobile terminal (8) through the transmitter unit (57).

3. The garbage disposal support apparatus (1) according to Claim 2, further comprising a face image obtaining unit (52) configured to obtain face image information about the person (P1) in association with the ID information about the mobile terminal (8),
wherein the disposal confirmation unit (59) confirms whether the person (P1) has disposed of the object (O) at the disposal place (S1) or not in consideration of the image information about the disposal place (S1) and the face image information about the person (P1).

4. The garbage disposal support apparatus (1) according to Claim 2 or 3, wherein the transmitter unit (57) transmits the route information (M1) to a display apparatus (4) arranged in an environment where the disposal place (S1) is arranged or to a display apparatus (81) of the mobile terminal (8).

5. The garbage disposal support apparatus (1) according to any one of Claims 1 to 3, further comprising a payment assigning unit (60) configured to assign a payment to the person (P1) having disposed of the garbage at the disposal place (S1).

6. A garbage disposal support method, comprising: obtaining position information about a person (P1) having an object (O) by a position obtaining unit; obtaining image information about the object (O) that the person (P1) has by an object image obtaining unit; checking the image information about the object (O) that the person (P1) has against garbage image information stored in a database and determine whether the object (O) is garbage or not by a garbage determination unit; generating route information (M1) by a route generation unit to a disposal place (S1) of the garbage, based on the position information about the person (P1) and on disposal place information stored in the database, if the object (O) is garbage; transmitting the route information (M1) by a transmitter unit to a display apparatus; the method **characterized in that**: obtaining image information about the disposal place (S1) by a disposal image obtaining unit; confirming by a disposal confirmation unit whether the person (P1) has disposed of the object (O) at the disposal place (S1) or not, based on the position information about the person (P1) and on the image information about the disposal place (S1).

7. The garbage disposal support method according to Claim 6, further comprising a step of assigning a payment to the person (P2) having disposed of the garbage (D).

8. The garbage disposal support method according to Claim 6 or 7, further comprising a step of generating recruiting information for recruiting participation applicants for a disposal operation of the garbage (D), transmitting the recruiting information to a mobile terminal, and selecting a person (P2) to dispose of the garbage (D) from among the applying participation applicants,
wherein the position information about the garbage (D) and the disposal place information are transmitted to the mobile terminal (107) owned by the selected person (P2) to dispose of the garbage (D).

9. The garbage disposal support method according to any one of Claims 6 to 8, further comprising:
a step of checking the image information about the garbage (D) against type-specific garbage image information stored in the database (105), and determining a type of the garbage (D); and
a step of identifying the disposal place (S2), based on the position information about the garbage (D), on type information about the garbage (D), and on garbage-type-specific disposal place information stored in the database (105).

10. The garbage disposal support method according to any one of Claims 6 to 9, further comprising a step of generating route information to the disposal place (S2), based on the position information about the mobile terminal (107), on the position information about the garbage (D), and on the disposal place information stored in the database (105).

11. The garbage disposal support method according to Claim 10, wherein the route information is transmitted to a display apparatus (103) arranged in an environment where the disposal place (S2) is arranged or to a display apparatus (171) of the mobile terminal (107).

## Patentansprüche

1. Abfallentsorgungsunterstützungsgerät (5), umfassend:
eine Positionserfassungseinheit (53), die ausgelegt ist, um Positionsinformationen über eine Person (P1) mit einem Objekt (O) zu erfassen;
eine Objektbilderfassungseinheit (54), die ausgelegt ist, um Bildinformationen über das Objekt (O) zu erfassen, das die Person (P1) hat;
eine Abfallbestimmungseinheit (55), die ausgelegt ist, um die Bildinformationen über das Objekt (O), das die Person (P1) hat, mit Abfallbildinformationen zu vergleichen, die in einer Datenbank (6) gespeichert sind, und zu bestimmen, ob das Objekt (O) Abfall ist oder nicht;
eine Routenerzeugungseinheit (56), die ausgelegt ist, um Routeninformationen (M1) zu einer Entsorgungsstelle (S1) des Abfalls basierend auf den Positionsinformationen über die Person (P1) und Entsorgungsstelleninformationen, die in der Datenbank (6) gespeichert sind, zu erzeugen, wenn das Objekt (O) Abfall ist; und
eine Übertragungseinheit (57), die ausgelegt ist, um die Routeninformationen (M1) an ein Anzeigegerät (4,81) zu übertragen;
wobei das Gerät **dadurch gekennzeichnet, dass**:
eine Abfallbilderfassungseinheit (58) ausgelegt ist, um Bildinformationen über die Entsorgungsstelle (S1) zu erfassen; und
eine Entsorgungsbestätigungseinheit (59), die ausgelegt ist, um basierend auf den Positionsinformationen über die Person (P1) und den Bildinformationen über die Entsorgungsstelle (S1) zu bestätigen, ob die Person (P1) das Objekt (O) an der Entsorgungsstelle (S1) entsorgt hat oder nicht.

2. Abfallentsorgungsunterstützungsgerät nach Anspruch 1, das außerdem eine ID-Erfassungseinheit (51) umfasst, die ausgelegt ist, um ID-Informationen über ein mobiles Endgerät (8) zu erfassen, das der Person (P1) gehört,
wobei, wenn die Person (P1) das Objekt (O) nicht innerhalb einer vorgegebenen Zeitspanne an der Entsorgungsstelle (S1) entsorgt, die Entsorgungsbestätigungseinheit (59) über die Sendeeinheit (57) Aufforderungsbenachrichtigungsinformationen, um auf die Entsorgung es Objekts (O) zu drängen, an das mobile Endgerät (8) sendet.

3. Abfallentsorgungsunterstützungsgerät (1) nach Anspruch 2, das außerdem eine Gesichtsbilderfassungseinheit (52) umfasst, die ausgelegt ist, um Gesichtsbildinformationen über die Person (P1) gemeinsam mit den ID-Informationen über das mobile Endgerät (8) zu erfassen,
wobei die Entsorgungsbestätigungseinheit (59) unter Berücksichtigung der Bildinformationen über die Entsorgungsstelle (S1) und die Gesichtsbildinformationen über die Person (P1) bestätigt, ob die Person (P1) das Objekt (O) an der Entsorgungsstelle (S1) entsorgt hat oder nicht.

4. Abfallentsorgungsunterstützungsgerät (1) nach Anspruch 2 oder 3, wobei die Sendeeinheit (57) die Routeninformationen (M1) an ein Anzeigegerät (4), das in einer Umgebung angeordnet ist, in der die Entsorgungsstelle (S1) angeordnet ist, oder an ein Anzeigegerät (81) des mobilen Endgeräts (8) sendet.

5. Abfallentsorgungsunterstützungsgerät (1) nach einem der Ansprüche 1 bis 3, das weiters eine Zahlungszuweisungseinheit (60) umfasst, die ausgelegt ist, um eine Zahlung an die Person (P1) zuzuweisen, die den Abfall an der Entsorgungsstelle (S1) entsorgt hat.

6. Abfallentsorgungsunterstützungsverfahren, das Folgendes umfasst: Erfassen von Positionsinformationen über eine Person (P1), die ein Objekt (O) hat, durch eine Positionserfassungseinheit; Erfassen von Bildinformationen über das Objekt (O), das die Person (P1) hat, durch eine Objektbilderfassungseinheit; Vergleichen der Bildinformationen über das Objekt (O), das die Person (P1) hat, mit Abfallbildinformationen, die in einer Datenbank gespeichert sind, und Bestimmen, ob das Objekt (O) Abfall ist oder nicht, durch eine Abfallbestimmungseinheit; Erzeugen von Routeninformationen (M1) zu einer Entsorgungsstelle (S1) des Abfalls durch eine Routenerzeugungseinheit basierend auf den Positionsinformationen über die Person (P1) und Entsorgungsstelleninformationen, die in der Datenbank gespeichert sind, wenn das Objekt (O) Abfall ist; Übertragen der Routeninformationen (M1) durch eine Sendeeinheit an ein Anzeigegerät; wobei das Verfahren **gekennzeichnet ist durch**: Erfassen von Bildinformationen über die Entsorgungsstelle (S1) **durch** eine Entsorgungsbilderfassungseinheit; Bestätigen **durch** eine Entsorgungsbestätigungseinheit, ob die Person (P1) das Objekt (O) an der Entsorgungsstelle (S1) entsorgt hat oder nicht, basierend auf den Positionsinformationen über die Person (P1) und den Bildinformationen über die Entsorgungsstelle (S1).

7. Abfallentsorgungsunterstützungsverfahren nach Anspruch 6, das außerdem einen Schritt des Zuweisens einer Zahlung zu der Person (P2) umfasst, die den Abfall (D) entsorgt hat.

8. Abfallentsorgungsunterstützungsverfahren nach Anspruch 6 oder 7, das außerdem einen Schritt des Erzeugens von Rekrutierinformationen zum Rekrutieren von Anmeldern zur Teilnahme an einem Entsorgungsvorgang des Abfalls (D), des Sendens der Rektrutierinformationen an ein mobiles Endgerät und des Auswählens einer Person (P2) zur Entsorgung des Abfalls (D) aus den angemeldeten Anmeldern zur Teilnahme umfasst,
wobei die Positionsinformationen über den Abfall (D) und die Entsorgungsstelleninformationen an das mobile Endgerät (107) gesendet werden, das der ausgewählten Person (P2) gehört, die den Abfall (D) entsorgt.

9. Abfallentsorgungsunterstützungsverfahren nach einem der Ansprüche 6 bis 8, das außerdem Folgendes umfasst:
einen Schritt des Vergleichens der Bildinformationen über den Abfall (D) mit typspezifischen Abfallbildinformationen, die in der Datenbank (105) gespeichert sind, und des Bestimmens des Typs des Abfalls (D); und
einen Schritt des Identifizierens der Entsorgungsstelle (S2) basierend auf den Positionsinformationen über den Abfall (D), auf Typinformationen über den Abfall (D) und auf abfalltypspezifischen Entsorgungsstelleninformationen, die in der Datenbank (105) gespeichert sind.

10. Abfallentsorgungsunterstützungsverfahren nach einem der Ansprüche 6 bis 9, das außerdem einen Schritt des Erzeugens von Routeninformationen zur Entsorgungsstelle (S2) basierend auf den Positionsinformationen über das mobile Endgerät (107), auf den Positionsinformationen über den Abfall (D) und auf Entsorgungsstelleninformationen, die in der Datenbank (105) gespeichert sind, umfasst.

11. Abfallentsorgungsunterstützungsverfahren nach Anspruch 10, wobei die Routeninformationen an ein Anzeigegerät (103), das in einer Umgebung angeordnet ist, in der die Entsorgungsstelle (S2) angeordnet ist, oder an ein Anzeigegerät (171) des mobilen Endgeräts (107) gesendet werden.

## Revendications

1. Appareil de prise en charge de mise au rebut de déchet (5), comprenant :
une unité d'obtention de position (53) configurée pour obtenir des informations de position au sujet d'une personne (P1) ayant un objet (O) ;
une unité d'obtention d'image d'objet (54) configurée pour obtenir des informations d'image au sujet de l'objet (O) qu'a la personne (P1) ;
une unité de détermination de déchet (55) configurée pour comparer les informations d'image au sujet de l'objet (O) qu'a la personne (P1) à des informations d'image de déchet stockées dans une base de données (6) et déterminer si l'objet (O) est ou non un déchet ;
une unité de génération d'itinéraire (56) configurée pour générer des informations d'itinéraire (M1) jusqu'à un lieu de mise au rebut (S1) du déchet, sur la base des informations de position au sujet de la personne (P1) et des informations de lieu de mise au rebut stockées dans la base de données (6), si l'objet (O) est un déchet ; et
une unité émettrice (57) configurée pour transmettre les informations d'itinéraire (M1) à un appareil d'affichage (4, 81) ;
l'appareil étant **caractérisé par** :
une unité d'obtention d'image de mise au rebut (58) configurée pour obtenir des informations d'image au sujet du lieu de mise au rebut (S1) ; et
une unité de confirmation de mise au rebut (59) configurée pour confirmer si la personne (P1) a ou non mis au rebut l'objet (O) au lieu de mise au rebut (S1), sur la base des informations de position au sujet de la personne (P1) et des informations d'image au sujet du lieu de mise au rebut (S1).

2. Appareil de prise en charge de mise au rebut de déchet selon la revendication 1, comprenant en outre une unité d'obtention d'identification (51) configurée pour obtenir des informations d'identification au sujet d'un terminal mobile (8) détenu par la personne (P1),
dans lequel, si la personne (P1) ne met pas l'objet (O) au rebut au lieu de mise au rebut (S1) au cours d'une période de temps prédéfinie, l'unité de confirmation de mise au rebut (59) transmet des informations de mise en demeure pour exiger la mise au rebut de l'objet (O), au terminal mobile (8) par l'intermédiaire de l'unité émettrice (57).

3. Appareil de prise en charge de mise au rebut de déchet (1) selon la revendication 2, comprenant en outre une unité d'obtention d'image de visage (52) configurée pour obtenir des informations d'image de visage au sujet de la personne (P1) en association avec les informations d'identification au sujet du terminal mobile (8),
dans lequel l'unité de confirmation de mise au rebut (59) confirme si la personne (P1) a ou non mis l'objet (O) au rebut au lieu de mise au rebut (S1) d'après les informations d'image au sujet du lieu de mise au rebut (S1) et les informations d'image de visage au sujet de la personne (P1).

4. Appareil de prise en charge de mise au rebut de déchet (1) selon la revendication 2 ou 3, dans lequel l'unité émettrice (57) transmet les informations d'itinéraire (M1) à un appareil d'affichage (4) agencé dans un environnement dans lequel le lieu de mise au rebut (S1) est agencé ou à un appareil d'affichage (81) du terminal mobile (8).

5. Appareil de prise en charge de mise au rebut de déchet (1) selon l'une quelconque des revendications 1 à 3, comprenant en outre une unité d'attribution de paiement (60) configurée pour attribuer un paiement à la personne (P1) ayant mis le déchet au rebut au lieu de mise au rebut (S1).

6. Procédé de prise en charge de mise au rebut de déchet, comprenant : l'obtention d'informations de position au sujet d'une personne (P1) ayant un objet (O) par une unité d'obtention de position ; l'obtention d'informations d'image au sujet de l'objet (O) qu'a la personne (P1) par une unité d'obtention d'image d'objet ; la comparaison des informations d'image au sujet de l'objet (O) qu'a la personne (P1) à des informations d'image de déchet stockées dans une base de données et la détermination si l'objet (O) est ou non un déchet par une unité de détermination de déchet ; la génération d'informations d'itinéraire (M1) par une unité de génération d'itinéraire jusqu'à un lieu de mise au rebut (S1) du déchet, sur la base des informations de position au sujet de la personne (P1) et des informations de lieu de mise au rebut stockées dans la base de données, si l'objet (O) est un déchet ; la transmission des informations d'itinéraire (M1) par une unité émettrice à un appareil d'affichage ; le procédé étant **caractérisé par** : l'obtention d'informations d'image au sujet du lieu de mise au rebut (S1) par une unité d'obtention d'image de mise au rebut ; la confirmation par une unité de confirmation de mise au rebut si la personne (P1) a ou non mis au rebut l'objet (O) au lieu de mise au rebut (S1), sur la base des informations de position au sujet de la personne (P1) et des informations d'image au sujet du lieu de mise au rebut (S1).

7. Procédé de prise en charge de mise au rebut de déchet selon la revendication 6, comprenant en outre une étape d'attribution d'un paiement à la personne (P2) ayant mis le déchet (D) au rebut.

8. Procédé de prise en charge de mise au rebut de déchet selon la revendication 6 ou 7, comprenant en outre une étape de génération d'informations de recrutement pour recruter des candidats de participation pour une opération de mise au rebut du déchet (D), de transmission des informations de recrutement à un terminal mobile, et de sélection d'une personne (P2) pour mettre le déchet (D) au rebut parmi les candidats de participation ayant postulé,
dans lequel les informations de position au sujet du déchet (D) et les informations de lieu de mise au rebut sont transmises au terminal mobile (107) détenu par la personne (P2) sélectionnée pour mettre le déchet (D) au rebut.

9. Procédé de prise en charge de mise au rebut de déchet selon l'une quelconque des revendications 6 à 8, comprenant en outre :
une étape de comparaison des informations d'image au sujet du déchet (D) à des informations d'image de déchet spécifiques au type stockées dans la base de données (105), et de détermination d'un type du déchet (D) ; et
une étape d'identification du lieu de mise au rebut (S2), sur la base des informations de position au sujet du déchet (D), d'informations de type au sujet du déchet (D) et d'informations de lieu de mise au rebut spécifiques au type de déchet stockées dans la base de données (105).

10. Procédé de prise en charge de mise au rebut de déchet selon l'une quelconque des revendications 6 à 9, comprenant en outre une étape de génération d'informations d'itinéraire jusqu'au lieu de mise au rebut (S2), sur la base des informations de position au sujet du terminal mobile (107), des informations de position au sujet du déchet (D) et des informations de lieu de mise au rebut stockées dans la base de données (105) .

11. Procédé de prise en charge de mise au rebut de déchet selon la revendication 10, dans lequel les informations d'itinéraire sont transmises à un appareil d'affichage (103) agencé dans un environnement dans lequel le lieu de mise au rebut (S2) est agencé ou à un appareil d'affichage (171) du terminal mobile (107).
